# FASCICULE DE BREVET EUROPEEN

(11) **EP 3 065 984 B1**
(45) Date de publication et mention de la délivrance du brevet: **18.12.2019**
(21) Numéro de dépôt: 14825367.7
(22) Date de dépôt: 10.10.2014
(51) Int. Cl.: B60W 20/00, B60W 30/18, B60W 30/182

(54) **STRATEGIE DE CONTROLE D'UNE FONCTION DE MARCHE RAMPANTE POUR UN VEHICULE HYBRIDE DISPOSANT D'UN MODE DE FREINAGE AVEC RECUPERATION D'ENERGIE**
STRATEGIE ZUR STEUERUNG EINER KRIECHFUNKTION FÜR EIN HYBRIDFAHRZEUG MIT EINEM BREMSMODUS MIT ENERGIERÜCKGEWINNUNG
STRATEGY FOR CONTROLLING A CREEP FUNCTION FOR A HYBRID VEHICLE HAVING A BRAKE MODE WITH ENERGY RECOVERY

(30) Priorité: 06.11.2013 FR 1360869
(43) Date de publication de la demande: 14.09.2016
(73) Titulaire: PSA Automobiles SA, 78300 Poissy (FR)
(72) Inventeur: HABBANI, Ridouane, F-92110 Clichy (FR); BLANCHET, Alexandre, F-78124 Montainville (FR)
(74) Mandataire: Fernandez, Francis Lionel
(86) Numéro de dépôt international: PCT/FR2014/052577
(87) Numéro de publication internationale: WO 2015/067867

(56) Documents cités:
- EP-A1- 2 159 118
- DE-A1-102007 043 586
- DE-A1-102009 056 160

## Description

La présente invention concerne une stratégie de contrôle d'une fonction de marche rampante pour un véhicule automobile, ainsi qu'un véhicule automobile comprenant des moyens mettant en œuvre une telle stratégie.

Les véhicules automobiles à boîte de vitesses équipée d'un convertisseur de couple hydraulique en entrée, comporte généralement une fonction de marche rampante qui est produite par ce convertisseur, appliquant à partir de l'arrêt lorsque le conducteur relâche la pédale de frein, un léger couple d'entraînement des roues motrices qui donne au véhicule une petite vitesse.

On peut en particulier faciliter les manœuvres du véhicule en marche avant ou en marche arrière, avec un contrôle de sa vitesse uniquement avec la pédale de frein. La vitesse obtenue généralement ne dépasse pas environ 7 km.

Pour les véhicules équipés d'une boîte robotisée disposant d'un embrayage commandé automatiquement, une fonction de marche rampante connue, présentée notamment par le document FR-B1-2909059, peut être activée par le conducteur à l'aide d'une commande spécifique, quel que soit le mode de fonctionnement automatique ou manuel de cette boîte robotisée.

Par ailleurs pour les véhicules hybrides disposant d'une motorisation auxiliaire qui peut travailler en génératrice afin de recharger des accumulateurs d'énergie, il est connu de réaliser un mode de freinage du véhicule comportant une récupération d'énergie, qui lorsque le conducteur relâche la pédale d'accélérateur, applique automatiquement avec la motorisation auxiliaire un léger couple de freinage équivalent à celui d'un frein moteur d'un moteur thermique, pour produire une énergie qui est stockée dans les accumulateurs.

La décélération du véhicule peut atteindre avec ce mode de freinage avec récupération, une valeur d'environ 1m/s².

Cependant un problème qui se pose lorsque le véhicule arrive à une faible vitesse avec le mode de freinage avec récupération, s'il dispose d'une fonction de marche rampante qui est activée, est que cette fonction va alors chercher à maintenir une petite vitesse du véhicule.

Pour obtenir l'arrêt complet du véhicule le conducteur doit alors appuyer sur la pédale de frein, ce qui en même temps freine le véhicule avec les patins de frottement du système de freinage classique, et désactive la fonction de marche rampante. L'arrêt du véhicule nécessite une demande du conducteur qui doit intervenir sur la pédale de frein.

De plus on a dans ce cas une dissipation d'énergie par les patins de frottement pendant la fin du freinage du véhicule, qui se fait au détriment du mode de freinage avec récupération d'énergie. La récupération d'énergie du véhicule n'est pas optimisée.

On connaît le document de brevet DE-A-10 2007 043586 divulguant un procédé de gestion d'une vitesse de marche rampante pour un véhicule hybride permettant d'effectuer un freinage avec récupération d'énergie.

On connaît le document de brevet DE-A-10 2009 056160 divulguant un passage d'un mode de freinage par récupération à un mode de marche rampante.

La présente invention a notamment pour but d'éviter ces inconvénients de la technique antérieure.

Elle propose à cet effet une stratégie de contrôle d'une fonction de marche rampante pour un véhicule automobile hybride disposant d'un mode de freinage avec récupération d'énergie activé automatiquement lorsque le conducteur relâche la pédale d'accélérateur, caractérisée en ce que le conducteur ayant relâché la pédale d'accélérateur, en dessous d'un seuil de vitesse, elle maintient le freinage avec récupération jusqu'à l'arrêt complet du véhicule sans activer la fonction de marche rampante tant que des critères de marche rampante prioritaire ne sont pas atteints, comprenant une pression sur la pédale de frein, et active cette fonction de marche rampante si ces critères sont atteints.

Un avantage de cette stratégie de contrôle est que l'on peut bénéficier d'une récupération d'énergie jusqu'à l'arrêt du véhicule, la fonction de marche rampante étant à tout moment simplement activée par la demande du conducteur appuyant notamment sur la pédale de frein. De plus ce type d'activation ne nécessite pas de commande spécifique pour cette fonction.

La stratégie de contrôle selon l'invention peut de plus comporter une ou plusieurs des caractéristiques suivantes, qui peuvent être combinées entre elles.

Avantageusement, les critères de marche rampante prioritaire comportent l'activation de la pédale d'accélérateur.

Avantageusement, le seuil de vitesse prédéterminé correspond à la vitesse maximum donnée par la fonction de marche rampante.

En particulier, le seuil de vitesse prédéterminé peut être d'environ 7km/h.

Avantageusement, la fonction de marche rampante étant activée, la stratégie désactive cette marche et active le freinage avec récupération si des critères de freinage prioritaire sont atteints, ces critères comprenant le dépassement du seuil de vitesse.

L'invention a aussi pour objet un véhicule automobile hybride disposant d'une fonction de marche rampante, et d'un mode de freinage avec récupération d'énergie activé automatiquement lorsque le conducteur relâche la pédale d'accélérateur, qui comporte des moyens mettant en œuvre une stratégie de contrôle de cette fonction de marche rampante, réalisée selon l'une quelconque des revendications précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma fonctionnel de la stratégie de contrôle selon l'invention ;
- la figure 2 est un graphique présentant en fonction du temps un fonctionnement de cette stratégie lors d'un arrêt complet du véhicule ; et
- la figure 3 est un graphique présentant lors de cet arrêt une activation de la fonction de marche rampante.

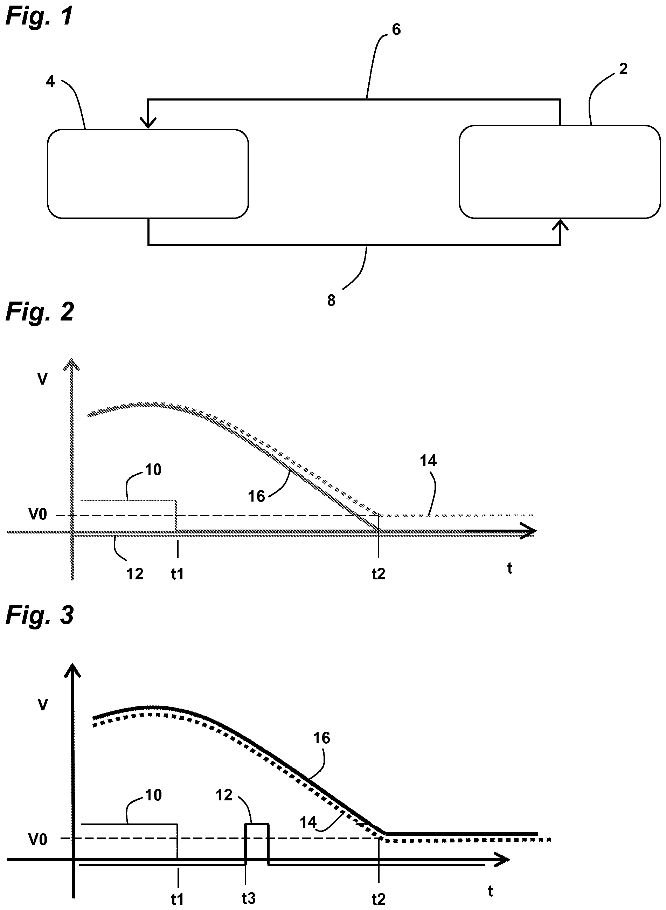

La figure 1 présente pour un véhicule hybride disposant d'une motorisation auxiliaire pouvant travailler en génératrice, un premier choix 2 pour la stratégie de contrôle d'une fonction de marche rampante, qui donne la priorité au freinage avec récupération d'énergie au détriment de l'activation de cette fonction, et un second choix 4 qui donne la priorité à la fonction de marche rampante au détriment de ce freinage avec récupération.

Lorsque le véhicule roule avec une vitesse quelconque, le conducteur relâchant la pédale d'accélérateur, le premier choix 2 est sélectionné, le freinage avec récupération d'énergie étant systématiquement activé tant que le conducteur ne presse pas la pédale de frein.

Le passage du premier choix 2 au second choix 4 se fait suivant des critères de marche rampante prioritaire 6, comprenant une vitesse du véhicule inférieure à un seuil prédéterminé, et un appui sur la pédale de frein ou sur la pédale d'accélérateur.

En particulier le seuil de vitesse prédéterminé correspond à la vitesse maximum possible donnée par la fonction de marche rampante, qui peut être de l'ordre de 7km/h.

Ensuite le retour du second choix 4 au premier choix 2 se fait suivant des critères de freinage avec récupération prioritaire 8, comprenant la vitesse du véhicule qui devient supérieure au seuil prédéterminé.

La figure 2 présente en fonction du temps t la position de la pédale d'accélérateur représentée par la courbe 10, qui est maintenue pressée au départ, puis relâchée au temps t1. La position de la pédale de frein représentée par la courbe 12, est toujours relâchée.

La vitesse du véhicule V obtenue sans la stratégie de contrôle de la fonction de marche rampante selon l'invention 14, comporte une courbe légèrement croissante au départ présentant une accélération du véhicule, puis une décroissance de cette courbe à partir du temps t1 où la pédale d'accélérateur est relâchée, la fonction de freinage avec récupération étant alors activée ce qui entraîne un freinage régulier du véhicule.

Au temps t2 la vitesse du véhicule ayant atteint le seuil de vitesse V0, la fonction de marche rampante est alors systématiquement activée pour maintenir de manière stable la vitesse du véhicule à ce seuil. Le freinage avec récupération d'énergie est alors désactivé, la fonction de marche rampante étant habituellement prioritaire sur ce freinage.

Si le conducteur veut arrêter le véhicule il doit alors presser la pédale de frein et actionner les moyens de freinage par frottement, ce qui dissipe une énergie cinétique du véhicule, et limite sa récupération par la motorisation auxiliaire travaillant en génératrice.

La vitesse du véhicule V obtenue avec la stratégie de contrôle de la fonction de marche rampante selon l'invention 16, comporte un freinage régulier du véhicule jusqu'à son arrêt complet que l'on atteint au temps t2.

La pédale d'accélérateur 10 ainsi que celle de freinage 12 n'ayant pas été pressées depuis le relâchement initial cette pédale d'accélérateur au temps t1, les critères de marche rampante prioritaire 6 ne sont jamais activés pendant ce freinage ce qui permet de récupérer jusqu'à la fin l'énergie cinétique du véhicule par le freinage avec récupération. De plus le conducteur n'a pas à intervenir pour obtenir l'arrêt complet de son véhicule.

Par contre dans le cas présenté figure 3 le conducteur applique une impulsion sur la pédale de frein au temps t3. Quand la vitesse du véhicule V descend en dessous du seuil V0 au temps t2, les critères de marche rampante prioritaire 6 sont remplis et cette marche rampante est activée. On obtient alors une stabilisation permanente de la vitesse du véhicule à ce seuil V0 par la fonction de marche rampante.

Il en serait de même dans le cas où le conducteur presse la pédale d'accélérateur à partir du temps t2, les critères de marche rampante prioritaire 6 seraient aussi remplis.

Le conducteur peut ainsi à tout moment intervenir lors d'un freinage avec récupération d'énergie, et en particulier si le véhicule est arrêté, par une action simple et rapide sur la pédale d'accélérateur ou de frein, pour obtenir une marche rampante de ce véhicule facilitant les manœuvres.

On notera que ce procédé d'actionnement ne nécessite aucune commande supplémentaire sur le véhicule, il utilise des moyens existants ainsi que des adaptations des logiciels de contrôle installés, ce qui est économique.

## Revendications

1. Stratégie de contrôle d'une fonction de marche rampante pour un véhicule automobile hybride disposant d'un mode de freinage avec récupération d'énergie activé automatiquement lorsque le conducteur relâche la pédale d'accélérateur, **caractérisée en ce que** le conducteur ayant relâché la pédale d'accélérateur (10), en dessous d'un seuil de vitesse prédéterminé (V0), elle maintient le freinage avec récupération jusqu'à l'arrêt complet du véhicule sans activer la fonction de marche rampante tant que des critères de marche rampante prioritaire (6) ne sont pas atteints, les critères de marche rampante prioritaire (6) comprenant une pression sur la pédale de frein, et active cette fonction de marche rampante si ces critères sont atteints.

2. Stratégie de contrôle d'une fonction de marche rampante selon la revendication 1, **caractérisée en ce que** les critères de marche rampante prioritaire (6) comportent l'activation de la pédale d'accélérateur (10).

3. Stratégie de contrôle d'une fonction de marche rampante selon la revendication 1 ou 2, **caractérisée en ce que** le seuil de vitesse prédéterminé (V0) correspond à la vitesse maximum donnée par la fonction de marche rampante.

4. Stratégie de contrôle d'une fonction de marche rampante selon la revendication 3, **caractérisé en ce que** le seuil de vitesse (V0) est d'environ 7km/h.

5. Stratégie de contrôle d'une fonction de marche rampante selon l'une quelconque des revendications précédentes, **caractérisé en ce que** la fonction de marche rampante étant activée, elle désactive cette marche et active le freinage avec récupération si des critères de freinage prioritaire (8) sont atteints, ces critères comprenant le dépassement du seuil de vitesse (V0).

6. Véhicule automobile hybride disposant d'une fonction de marche rampante, et d'un mode de freinage avec récupération d'énergie activé automatiquement lorsque le conducteur relâche la pédale d'accélérateur, **caractérisé en ce qu'**il comporte des moyens mettant en œuvre une stratégie de contrôle de cette fonction de marche rampante, réalisée selon l'une quelconque des revendications précédentes.

## Patentansprüche

1. Strategie zur Steuerung einer Schleichfunktion für ein Hybridfahrzeug, das über einen Bremsmodus mit Energierückgewinnung verfügt, der automatisch aktiviert wird, wenn der Fahrer das Gaspedal freigibt, **dadurch gekennzeichnet, dass**, wenn der Fahrer das Bremspedal (10) unter einem vorbestimmten Geschwindigkeitsschwellenwert (V0) freigegeben hat, das Bremsen mit Rückgewinnung bis zu dem vollständigen Stoppen des Fahrzeugs aufrecht erhält, ohne die Schleichfunktion zu aktivieren, solange prioritäre Schleichfunktionskriterien (6) nicht erreicht sind, wobei die Schleichfunktionskriterien (6) einen Druck auf das Gaspedal umfassen, und diese Schleichfunktion aktiviert, falls diese Kriterien erreicht sind.

2. Strategie zur Steuerung einer Schleichfunktion nach Anspruch 1, **dadurch gekennzeichnet, dass** die Schleichfunktionskriterien (6) das Aktivieren des Gaspedals (10) umfassen.

3. Strategie zur Steuerung einer Schleichfunktion nach Anspruch 1 oder 2, **dadurch gekennzeichnet, dass** der vorbestimmte Geschwindigkeitsschwellenwert (V0) der maximalen Geschwindigkeit entspricht, die durch die Schleichfunktion gegeben ist.

4. Strategie zur Steuerung einer Schleichfunktion nach Anspruch nach Anspruch 3, **dadurch gekennzeichnet, dass** der Geschwindigkeitsschwellenwert (V0) etwa 7 km/h beträgt.

5. Strategie zur Steuerung einer Schleichfunktion nach einem der vorstehenden Ansprüche, **dadurch gekennzeichnet, dass**, wenn die Schleichfunktion aktiviert ist, sie diesen Betrieb deaktiviert und das Bremsen mit Rückgewinnung aktiviert, falls prioritäre Bremskriterien (8) erreicht sind, wobei diese Kriterien das Überschreiten des Geschwindigkeitsschwellenwerts (V0) umfassen.

6. Hybridkraftfahrzeug, das über eine Schleichfunktion und einen Bremsmodus mit Energierückgewinnung verfügt, der automatisch aktiviert wird, wenn der Fahrer das Bremspedal freigibt, **dadurch gekennzeichnet, dass** es Mittel umfasst, die eine Strategie zur Steuerung dieser Schleichfunktion umsetzen, die gemäß einem der vorstehenden Ansprüche ausgeführt wird.

## Claims

1. A strategy for controlling a creep function for a hybrid motor vehicle having a brake mode with energy recovery which is automatically activated when the driver releases the accelerator pedal, **characterized in that**, when the driver has released the accelerator pedal (10), below a predetermined speed threshold (V0), said strategy maintains braking with recovery until the complete stop of the vehicle without activating the creep function as long as priority creep criteria (6) are not met, the priority creep criteria (6) including a pressure on the brake pedal, and activates this creep function if the criteria are met.

2. The strategy for controlling a creep function according to Claim 1, **characterized in that** the priority creep criteria (6) comprise the activation of the accelerator pedal (10).

3. The strategy for controlling a creep function according to Claim 1 or 2, **characterized in that** the predetermined speed threshold (V0) corresponds to the maximum speed given by the creep function.

4. The strategy for controlling a creep function according to Claim 3, **characterized in that** the speed threshold (V0) is approximately 7 km/h.

5. The strategy for controlling a creep function according to any one of the preceding claims, **characterized in that**, the creep function being activated, it deactivates this creep and activates the braking with recovery if priority braking criteria (8) are met, these criteria including the exceeding of the speed threshold (V0).

6. A hybrid motor vehicle having a creep function, and having a brake mode with energy recovery which is automatically activated when the driver releases the accelerator pedal, **characterized in that** it comprises means implementing a strategy for controlling this creep function, realized according to any one of the preceding claims.
